# EUROPEAN PATENT SPECIFICATION

(11) **EP 1 930 892 B1**
(45) Date of publication and mention of the grant of the patent: **12.08.2009**
(21) Application number: 07022691.5
(22) Date of filing: 22.11.2007
(51) Int. Cl.: G11B 7/135

(54) **Optical pickup device**
Optische Lesekopfvorrichtung
Tête de lecture/écriture optique

(30) Priority: 04.12.2006 JP 2006326404
(43) Date of publication of application: 11.06.2008
(73) Proprietor: Funai Electric Co., Ltd., Daito-shi Osaka 574-0013 (JP)
(72) Inventor: Nishioka, Ken, Daito-shi Osaka 574-0013 (JP); Sasabe, Mitsuyoshi, Daito-shi Osaka 574-0013 (JP); Hamaoka, Mika, Daito-shi Osaka 574-0013 (JP)
(74) Representative: Beetz & Partner

(56) References cited:
- WO-A-03/049089
- JP-A- 9 161 307
- JP-A- 2000 163 791
- US-A1- 2002 093 902
- US-A1- 2004 017 759
- US-B1- 6 414 930
- US-B2- 6 496 453

## Description

### BACKGROUND OF THE INVENTION

### 1. Field of the Invention

The present invention relates to an optical pickup device, in particular, the present invention relates to an optical pickup device which is, for example, compatible with a plurality kinds of optical discs such as a CD (compact disc), a DVD (digital versatile disc), a BD (Blu-ray Disc or the like: high density optical disc utilizing blue laser beam) and the like.

### 2. Description of Related Art

For example, in an optical pickup device which is applicable to a plurality kinds of optical discs (for example, a CD, a DVD and a BD), in which wavelengths of used laser beams are different by one objective lens, it is necessary to make a beam spot which is formed by the objective lens in a circular shape which has a small diameter in order that enough reproducing signal is obtained from any kind of the optical discs. Beam shaping for it is effective to make a spot shape into circular shape without reducing efficiency for light utilization. Especially in a case for blue laser beam, the beam shaping is necessary for securing rim strength (that is, peripheral intensity ratio of flux of light which is input to the objective lens). Further, because coma aberration is generated if input direction of the respective laser beams to the objective lens are different, it is also necessary that inclination of all the laser beams with respect to an optical axis is corrected such that they are input to the objective lens from the same direction.

As for the spot shape, an optical pickup device in which the laser beam is converted from an elliptic shape beam to a circular shape beam by an upstand mirror which has the beam shaping function, is proposed in JP-A-2003-098350, and JP-A-2002-304761. Further, as for a direction of the laser beam, an optical pickup device in which the inclination of the beam spot with respect to an optical axis is corrected by the upstand mirror which has wavelength selection film, is proposed in JP-A-2003-098350, JP-A-2002-304761, and JP-A-2002-163836. In the upstand mirror, the wavelength selection film and a total reflection film are formed and the correction is performed such that laser beam having the wavelength which corresponds to that of the laser beam which is reflected by the wavelength selection film and laser beam having the wavelength which corresponds to that of the laser beam passing the wavelength selection film and reflected by the total reflection film have the same inclination state with respect to the optical axis.

In the optical pickup device which is applicable to a plurality kinds of optical discs in which wavelengths of used laser beams are different by one objective lens, when aberration correction of an objective lens is performed in an infinite system for a particular wavelength, the aberration correction has to be performed in finite system for other wavelengths. For example, in an optical pickup device which is applicable to three kinds of optical discs in which wavelengths of used laser beams are different by one objective lens and three laser light sources which emits blue laser beam, red laser beam, and infrared laser beam respectively, if three wavelength compatibility is realized utilizing an objective lens of which aberration is corrected in the infinite system for the blue laser beam, the objective lens has to be the finite system for red or infrared laser beams in order to perform the aberration correction for red or infrared laser beams.

However, if the upstand mirror described in JP-A-2003-098350, JP-A-2002-304761, or JP-A-2002-163836 is utilized, the red or infrared laser beam is input in a divergent state to a transparent member which forms the upstand mirror when the objective lens is used as the finite system for the red or infrared laser beam. When the divergent light passes the transparent member, good beam spot becomes not obtained because astigmatism is generated there. Because we assume that parallel light is input to the upstand mirror described in JP-A-2003-098350, JP-A-2002-304761, and JP-A-2002-163836, there is no consideration for the astigmatism which is generated by input of the divergent light as above described.

US 2002/093902 A1 shows an optical pickup unit according to the preamble of claim 1 which includes first and second light sources of first and second wavelengths, and which further comprises a dichroic element, a phase plate, and an objective lens, wherein one of the first and second light sources is described to be selected so that information recording or reproduction is performed by converging a light beam emitted from the selected one of the first and second light sources on an optical recording medium via the dichroic element, the phase plate, and the objective lens.

WO 2003/049089 A shows an optical scanning device for scanning a dual-layer optical record carrier, wherein the device comprises a spherical aberration compensation optical subsystem which is described to include a switchable liquid crystal cell for altering a wavefront deviation generated in a folding mirror including non-periodic phase structure located behind a polarisation-selective reflective layer.

### SUMMARY OF THE INVENTION

An object of the present invention is to provide an optical pickup device which is applicable to a plurality of wavelengths, which has a beam shaping mirror in which a beam shaping for one wavelength among the wavelengths can be performed, and aberration is not generated in the respective wavelengths.

An optical pickup device in an aspect of the present invention, is applicable to a plurality of kinds of optical discs in which wavelengths of used laser beams are different by a plurality of laser light sources which emit laser beams having different wavelength each other, and one objective lens, the device includes: a beam shaping mirror disposed in an optical path between the objective lens and the plurality of laser light sources. The beam shaping mirror is composed of a transparent member which has a first optical surface on which a wavelength selection film and a diffraction grating are formed, and a second optical surface that is composed of a reflecting surface and the first and second optical surfaces are positioned in not parallel. The optical pickup device has a structure in which a first and second laser beams among the plurality of laser beams emitted from the plurality of laser light sources, are input to the beam shaping mirror as infinite system lights, the first laser beam is input to the objective lens as the infinite system light, and the second laser beam is input to the objective lens as finite system light. The wavelength selection film has wavelength selectivity by which the first laser beam is passed and the second laser beam is reflected. Light intensity distribution of the first laser beam is converted from an elliptic shape to a circular shape by operation in which the first laser beam which passes the wavelength selection film and is input to the beam shaping mirror, is reflected on the second optical surface, passes the wavelength selection film and is output from the beam shaping mirror. The diffraction grating has an optical axis correcting function by which directions of the first and second laser beams which are output from the beam shaping mirror are made the same by diffraction of the second laser beam, and a lens function by which the second laser beam is diverged by a diffracting action.

### BRIEF DESCRIPTION OF THE DRAWINGS

Fig. 1 is a schematic diagram to show an embodiment of an optical pickup device;
Figs. 2A and 2B are diagrams to show optical paths and cross sections of beam shaping mirrors;
Figs. 3A to 3C are diagrams of optical path for explaining structure and operation of a diffraction grating which is included in the beam shaping mirror; and
Figs. 4A and 4B are diagrams of optical path for explaining inclination correction with respect to an optical axis of the beam shaping mirror.

### DETAILED DESCRIPTION OF THE PREFERRED EMBODIMENTS

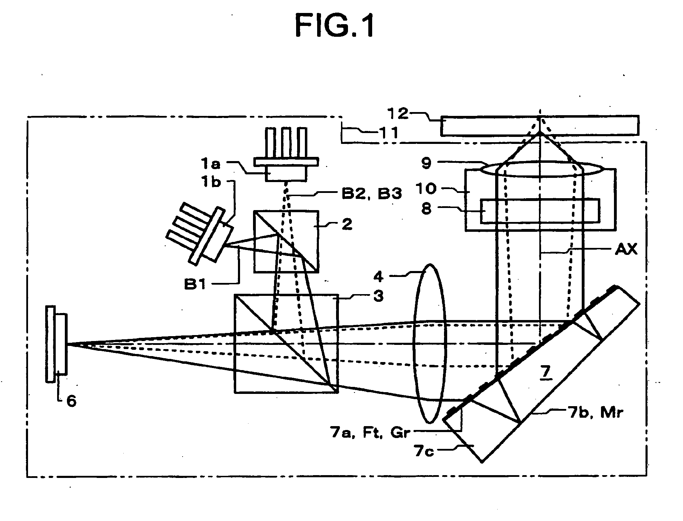

Hereinafter embodiment and the like of an optical pickup device in accordance with the present invention will be described with reference to the attached drawings. In Fig. 1 general structure of one embodiment of an optical pickup device is shown schematically. This optical pickup device 11 is a three wavelength and one lens type optical pickup device which is applicable to three kinds of optical discs 12 in which wavelengths of used laser beams are different by three laser light sources having different oscillation wavelengths composed of two light sources mounted on a two wavelength semiconductor laser 1 a for red or infrared laser and a light source mounted on a semiconductor laser 1b for blue laser, and one objective lens 9. And the device 11 has a structure which can perform recording and reproducing of information for each of the three kinds of optical discs 12.

The three kinds of optical discs 12 which are supposed here are, for example, a first optical disc which is applicable to blue laser having wavelength of λ1 405 nm, i.e., a high density optical disc using blue laser beam and having base plate thickness of 0.1 mm and numerical aperture (NA) of 0.85, a second optical disc which is applicable to red laser having wavelength of λ2 650 nm, i.e., a DVD having base plate thickness of 0.6 mm and NA of 0.6 to 0.65, and a third optical disc which is applicable to infrared laser having wavelength of λ3 780 nm, i.e., a CD having base plate thickness of 1.2 mm and NA of 0.45 to 0.5. However, wavelengths which are used are not limited to these examples. Further, application of the present invention is not limited to the optical disc but the present invention can be applied to any optical information recording medium other than the optical disc.

The optical pickup device 11 which is shown in Fig. 1 is equipped with the two wavelength semiconductor laser 1a for red and infrared laser, the semiconductor laser 1b for blue laser, a dichroic prism 2, a beam splitter 3, a collimator lens 4, a photo detector 6, a beam shaping mirror 7, an aberration correcting element 8, an objective lens 9, a holder 10, and the like. Hereinafter, an optical structure of the optical pickup device 11 will be explained in an order along its optical path.

The optical pickup device 11 includes the two light sources mounted on the two wavelength semiconductor laser 1a for red and infrared laser and the one light source mounted on the semiconductor laser 1b for blue laser as the laser light sources as above described. Recording or reproducing of the optical information to the corresponding optical disc 12 is performed using a blue laser beam B1 having wavelength of λ1, a red laser beam B2 having wavelength of λ2, or an infrared laser beam B3 having wavelength of λ3, which is emitted by lighting-up of any one of the three laser light sources (λ1 < λ2 < λ3).

The laser beam B1, B2, or B3 which is emitted from the semiconductor laser 1a or 1b is input to the dichroic prism 2. The dichroic prism 2 is an optical path combining element which combines the optical paths of the blue laser beam B1, the red laser beam B2, and the infrared laser beam B3, respectively. Therefore, the blue laser beam B1 which is emitted from the semiconductor laser 1b is reflected by the dichroic prism 2, and the red laser beam B2, or the infrared laser beam B3 which is emitted from the semiconductor laser 1a passes the dichroic prism 2, as a result, the optical paths of the respective laser beams B1 to B3 are combined.

A part of the laser beam B1, B2, or B3 which is output from the dichroic prism 2 is reflected by the beam splitter 3. The beam splitter 3 is an optical path dividing element which performs dividing of an optical path from the respective semiconductor lasers 1a and 1b to the optical disc 12 (going path) and an optical path from the optical disc 12 to the photo detector 6 (returning path), and it functions as a half mirror to divide light amount of input light in two to transmitted light and reflected light.

The laser beam B1, B2, or B3 which is reflected by the beam splitter 3 is converted into parallel rays by the collimator lens 4, and then it is input to the beam shaping mirror 7. The beam shaping mirror 7 is composed of a transparent member 7c which has a first optical surface 7a on which a wavelength selection film Ft and a diffraction grating Gr are formed, and a second optical surface 7b that is composed of a reflecting surface, and the first and second optical surfaces are positioned in not parallel. That is to say, the beam shaping mirror 7 is composed of the transparent member 7c which has a trapezoidal cross section is used as a base material, the wavelength selection film Ft and the diffraction grating Gr are made on the first optical surface 7a in a front surface side of the transparent member, and a total reflection film Mr (for example, metal film or dielectric multilayer) is made on the second optical surface 7b in a back surface side of the transparent member.

The wavelength selection film Ft has wavelength selectivity so that it passes the blue laser beam B1 and it reflects the red laser beam B2 and the infrared laser beam B3. As a result, the blue laser beam B1 which is input to the beam shaping mirror 7, firstly passes the wavelength selection film Ft on the first optical surface 7a, next, it is reflected by a reflecting surface which is formed by the total reflection film Mr on the second optical surface 7b, and it passes the wavelength selection film Ft on the first optical surface 7a, then, it is output from the beam shaping mirror 7. As above described, by passing of the blue laser beam B1 through the beam shaping mirror 7, light intensity distribution of the blue laser beam B1 is converted from an elliptic shape into a circular shape. Because the beam shaping mirror 7 does not have any optical power for the blue laser beam B1, the blue laser beam B1 which is input to the beam shaping mirror 7 as an infinite system light, is beam-shaped and an optical path of it is bent at substantially ninety degrees toward the objective lens 9 such that it is input to the objective lens 9 as the infinite system light.

On the other hand, the red laser beam B2 or the infrared laser beam B3 which is input to the beam shaping mirror 7 is reflected by the wavelength selection film Ft and an optical path of it is bent in substantially ninety degrees toward the objective lens 9. At this time the red laser beam B2 or the infrared laser beam B3 receives a diffraction action by the diffraction grating Gr. The diffraction grating Gr has an optical axis correcting function which makes directions of the laser beams B 1 to B3 which are output from the beam shaping mirror 7 become the same by diffraction of the red laser beam B2 and the infrared laser beam B3 and a lens function which makes the red laser beam B2 and the infrared laser beam B3 diverge by the diffracting action. As a result, the inclination of the red laser beam B2 or the infrared laser beam B3 which is input to the beam shaping mirror 7 as the infinite system light is corrected with respect to the optical axis AX and optical path of it is bent in substantially ninety degrees toward the objective lens 9 such that it is input to the objective lens 9 as the finite system light. A detail of the beam shaping mirror 7 will be described later.

The laser beam B1, B2, or B3 which is output from the beam shaping mirror 7 passes the aberration correcting element 8 (for example, liquid crystal element), and it is condensed by the objective lens 9, then reaches a recording surface of the optical disc 12 for image forming. The aberration correcting element 8 and the objective lens 9 are held by the holder 10, and they are composed to be driven in integrated manner by an actuator (not shown) when focusing, tracking or the like is performed. Because positional relation between the aberration correcting element 8 and the objective lens 9 is kept always (both of information recording and reproducing) in a constant state by the holder 10, deterioration in characteristic caused by the positional displacement between the aberration correcting element 8 and the objective lens 9 can be avoided.

When the information is reproduced, the laser beam B1, B2, or B3 which is reflected on the recording surface of the optical disc 12, passes the objective lens 9 and the aberration correcting element 8 in this order, and it is reflected by the beam shaping mirror 7, passes the collimator lens 4, then a part of it passes the beam splitter 3. The laser beam B1 to B3 which passes the beam splitter 3, reaches a light receiving surface of the photo detector 6 for image forming. The photo detector 6 detects the light information of the laser beam B1, B2, or B3 which is received to output it as an electric signal.

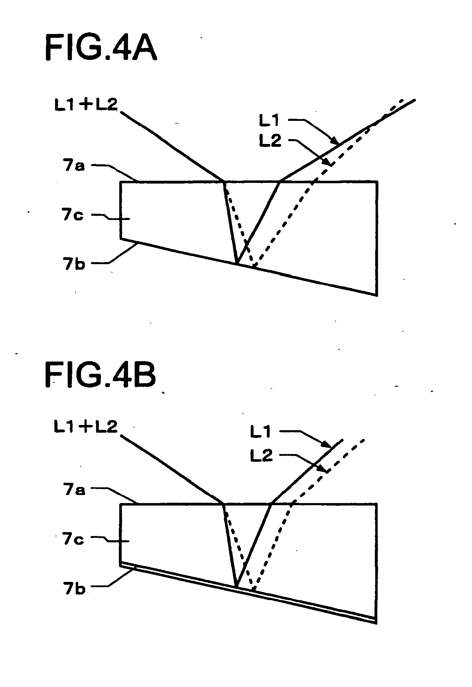

In general prism type beam shaping element (which has the trapezoidal shape cross section or a wedge shape cross section) which has been well known heretofore, the beam shaping is performed by the transparent member that has the transmission surface and the reflecting surface which are not parallel each other. Because of this, the laser beams which are input to the transmission surface, are refracted at angles that are different with respect to every wavelength by dispersion characteristic of the transparent member. For example, as shown in Fig. 4A, if the blue laser light L1 (solid line), and the red laser light L2 (dotted line) are input from the first optical surface 7a to the transparent member 7c at the same incident angle, a direction of laser light L1 and L2 output from the transparent member 7c become different by difference of an angle of refraction at the first optical surface 7a with respect to the transparent member 7c (that is to say, dispersion characteristic), when the lights are input, because refractive index for the blue laser light L1 is larger than the refractive index for the red laser light L2. This means that inclination is caused with respect to the optical axis of one of the laser beams having one wavelength.

As the present embodiment if the beam shaping mirror is utilized as the upstand mirror, it is necessary that two laser lights L1 and L2 are corrected such that they have the same inclination state with respect to the optical axis AX (Fig. 1). It is possible to perform the correction by forming a diffraction grating on the second optical surface 7b of the transparent member 7c. That is to say, as shown in Fig. 4B, if dispersion characteristic of the wavelength which is possessed by the transparent member 7c is cancelled out by dispersion characteristic of the diffraction grating, it is possible to realize the beam shaping for two wavelengths without generating inclination of the optical axis in each of the wavelengths. However, there is a problem, if this is applied to the three wavelengths compatibility. The reason of the problem is that, for example, in a case where the three wavelengths compatibility is performed by one objective lens which is corrected such that the aberration becomes minimum for the wavelength of blue laser, the objective lens has to be in a finite system for the wavelength of red or infrared laser in order to perform aberration correction for the wavelength of red or infrared laser. However, in a case where the beam shaping mirror is utilized in the finite system, because the red or infrared laser beam passes the transparent member 7c in a divergent state, it causes a problem that astigmatism is generated or the like.

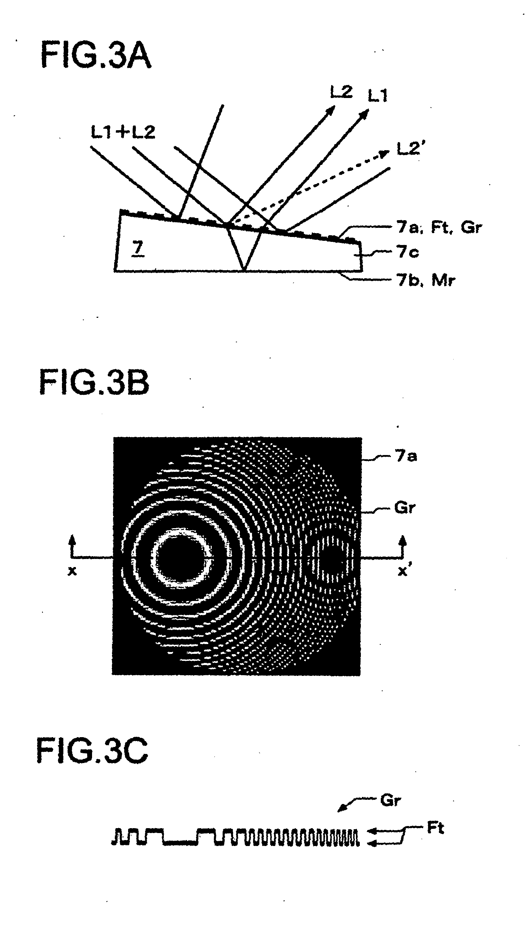

To solve the above described problem, in the present embodiment (Fig. 1), a reflecting surface is formed by the wavelength selection film Ft formed on the first optical surface 7a, passing the blue laser beam B1 and reflecting the red laser beam B2 and the infrared laser beam B3, in addition, the diffraction grating Gr formed on the first optical surface 7a, having the optical axis correcting function for the laser beams having the red and the infrared wavelengths and the lens function making parallel ray of the laser beams having the red and the infrared wavelengths diverge, and total reflection film Mr formed on the second optical surface 7b. A structure of the beam shaping mirror 7 which has the wavelength selection film Ft, the diffraction grating Gr, and the like as above described is shown in Figs. 3A to 3C. Fig. 3A shows schematically a cross sectional structure of the beam shaping mirror 7, Fig. 3B shows a diffraction pattern structure of the diffraction grating Gr, and Fig. 3C shows schematically cross sectional surface when cut along a line x - x' in Fig. 3B. As shown in Fig. 3B, the diffraction grating Gr is structured to have a diffraction pattern structure in which a plurality of circular shape grooves are formed substantially in a concentric manner in an effective optical path area (or in whole area) of the second optical surface 7b. Further the diffraction grating Gr has a structure in which a plurality of circular shape grooves having a rectangular shape cross section, are formed as shown in Fig. 3C. However, the diffraction grating which has a structure in which a plurality of circular shape grooves having a saw tooth shape cross section are formed may be utilized as the diffraction grating Gr.

The blue laser beam B1 which is output from the collimator lens 4 is input to the beam shaping mirror 7 as the infinite system light as shown in Fig. 1. And the beam shaping is performed by operation in which after the blue laser beam B1 passes the wavelength selection film Ft formed on the first optical surface 7a, reflected on the second optical surface 7b, passes the wavelength selection film Ft and output from the beam shaping mirror 7. At this time, an attaching angle of the beam shaping mirror 7 is set such that the laser beam B1 which is input to the objective lens 9 does not have any inclination angle with respect to the optical axis AX.

Further, if there is any positional displacement of center position of the beam intensity among the blue laser beam B1, the red laser beam B2, and the infrared laser beam B3, it causes a problem of control (tracking control, focusing control, and the like) by an offset or the like in the photo detector 6, therefore, the semiconductor laser 1b for the blue laser is attached in slanted manner as shown in Fig. 1 in order for the center positions of the beam intensity of the respective laser beams B1 to B3 to agree with each other. By disposing the laser light source 1b for the blue laser in slanted manner in order for the center positions of the beam intensity of the respective laser beams B1 to B3 to agree with each other, it becomes possible to correct the positional displacement of the blue laser beam B1 with respect to the other laser beams B2 and B3 by simple structure. In addition, it is possible to perform the adjustment for matching the center position of the beam intensity by disposing separately the collimator lenses 4 for respective semiconductor lasers 1a, 1b and by moving a part from the semiconductor laser 1a for the blue laser to the collimator lens which corresponds to the semiconductor laser in a direction vertical to the optical axis.

Generally in a beam shaping in which the laser beam is converted from the elliptic shape beam to the circular shape beam, there is a type that enlarges the beam diameter in minor axis direction of a cross section of the elliptic shape beam and a type that reduces the beam diameter in major axis direction of the cross section of the elliptic shape beam. The optical pickup device 11 which is shown Fig. 1 employs the beam shaping in which the beam diameter of the blue laser beam B 1 is enlarged in the minor axis direction of the cross section of the elliptic shape beam. However, it is also possible to employ the beam shaping in which the beam diameter of the blue laser beam B1 is reduced in the major axis direction of the cross section of the elliptic shape beam in the optical pickup device 11 by alteration of a layout of the beam shaping mirror 7.

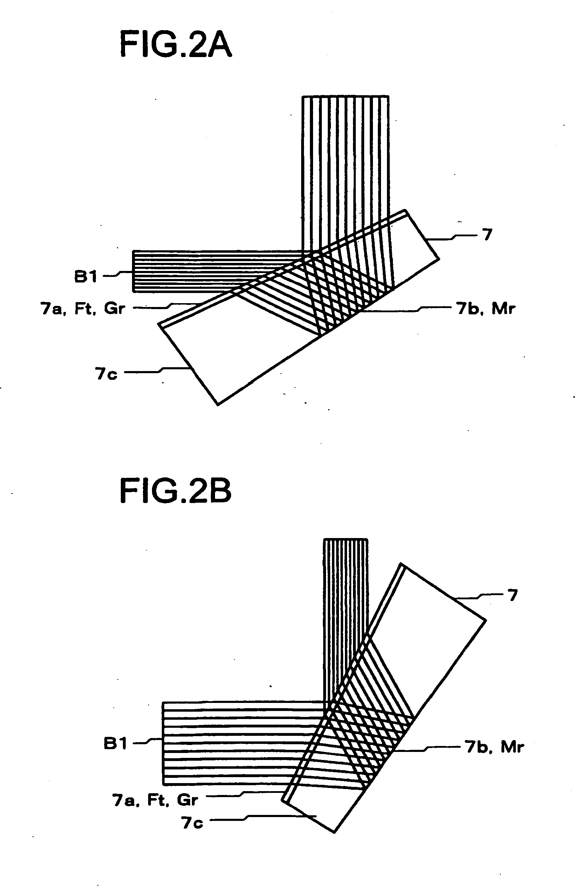

In Fig. 2A a layout of the beam shaping mirror 7 and optical path are shown when the beam diameter of the blue laser beam B1 is enlarged in the minor direction of the cross section of the elliptic shape beam, and in Fig. 2B a layout of the beam shaping mirror 7 and optical path are shown when the beam diameter of the blue laser beam B1 is reduced in the major direction of the cross section of the elliptic shape beam. Even when the beam shaping is performed in any types shown in Figs. 2A and 2B, the light intensity distribution of the laser beam can be converted from the elliptic shape to the circular shape which is ideal by adjustment of angle, space, and the like formed by the first optical surface 7a and the second optical surface 7b into a prescribed values. Therefore, it is possible to form a good beam spot which has the high rim strength on the recording surface of the optical disc 12.

The red laser beam B2 or the infrared laser beam B3 which is output from the collimator lens 4 is input to the beam shaping mirror 7 as the infinite system light as shown in Fig. 1. Then, the red laser beam B2 or the infrared laser beam B3 is reflected toward the objective lens 9 by the wavelength selection film Ft which is formed on the first optical surface 7a of the beam shaping mirror 7. Because the red laser beam B2 or the infrared laser beam B3 is reflected at the first optical surface 7a on the beam shaping mirror 7, it does not pass the transparent member 7c in the divergent state. As a result, the astigmatism is not generated in the beam shaping mirror 7.

When the red laser beam B2 or the infrared laser beam B3 is reflected by the wavelength selection film Ft on the first optical surface 7a, the red laser beam B2 and the infrared laser beam B3 become divergent light by a diffracting action of the diffraction grating Gr. That is to say, the red laser beam B2 or the infrared laser beam B3 which is input to the beam shaping mirror 7 as the infinite system light, is input to the objective lens 9 as the finite system light by an optical power of the diffraction grating Gr. By a structure in which the red laser beam B2 and the infrared laser beam B3 are input to the objective lens 9 as the finite system lights, it becomes possible to perform adequately the aberration correction for the red laser beam B2 and the infrared laser beam B3.

Further, when the red laser beam B2 or the infrared laser beam B3 is reflected by the wavelength selection film Ft on the first optical surface 7a, the inclination correction with respect to the optical axis AX is performed by the diffracting action of the diffraction grating Gr. That is to say, the attaching angle of the beam shaping mirror 7 is set such that the blue laser beam B1 becomes a optimal state where no inclination is generated with respect to the optical axis AX, therefore, the inclination of the direction of the red laser beam B2 or the infrared laser beam B3 is corrected by the diffraction grating Gr. For example, when the blue laser light L1 and the red laser light L2 are input to the transparent member 7c in the same incident angle from the first optical surface 7a as shown in Fig. 3A, the red laser light L2' (dotted line) is output from the first optical surface 7a in a different direction from the blue laser light L1 if no inclination correction is performed at the diffraction grating Gr. When the inclination correction is performed at the diffraction grating Gr as the present embodiment, it becomes possible for the red laser light L2 (solid line) to be output from the first optical surface 7a in the same direction (in other words, in the parallel direction) as the blue laser light L1 by it's diffracting action. By this arrangement, it becomes possible for the laser beams B1 to B3 to be input to the objective lens 9 from the same direction by the diffracting action of the diffraction grating Gr, as a result, generation of the coma aberration can be avoided.

As explained above, because the optical pickup device 11 is structured such that the blue laser beam B1 is input to the objective lens 9 as the infinite system light, and the red laser beam B2 and the infrared laser beam B3 are input to the objective lens 9 as the finite system lights, it becomes possible to perform adequately the aberration correction for the respective laser beams B1 to B3. Even though the optical pickup device 11 is structured such that the red laser beam B2 and the infrared laser beam B3 are input to the objective lens 9 as the finite system lights, there is no generation of the astigmatism at the beam shaping mirror 7 because the red laser beam B2 and the infrared laser beam B3 are reflected by the wavelength selection film Ft. On the other hand, because the light intensity distribution of the blue laser beam B1 is converted from the elliptic shape to the circular shape by the beam shaping mirror 7, a minute beam spot can be obtained efficiently.

Further, because the optical pickup device has a structure in which the red laser beam B2 and the infrared laser beam B3 which are input to the beam shaping mirror 7 as the infinite system lights, are diverged by the diffracting action utilizing the lens function of the diffraction grating Gr for the red laser beam B2 and the infrared laser beam B3, it is possible to design to dispose collimator lens 4 such all the laser beams B 1 to B3 are input to the beam shaping mirror 7 as the infinite system lights. Because the image forming points in the returning path can be a same position for all the laser beams B 1 to B3 by forming the laser beams having respective three wavelengths as the infinite system lights, the optical pickup device can be designed such that a distance from a collimating position to a photo detecting position is the same for each of the laser beams. As a result, one photo detector 6 receives the respective laser beams B1 to B3 and it becomes possible to reduce number of parts by shared use of the photo detector 6. Further, because the respective laser beams B1 to B3 having three wavelengths can be input to the objective lens 9 from the same direction by the optical axis correcting function of the diffraction grating Gr for the red laser beam B2 and the infrared laser beam B3, generation of the coma aberration can be avoided as a result. Therefore, an optical pickup device 11 that has three wavelengths compatibility can be realized by which good beam spot can be obtained for the laser beams having the three wavelengths.

When an optical pickup device is structured as above described optical pickup device 11, it is possible to obtain good signal (for example, recording signal and reproducing signal) by the beam shaping of the laser beams having the three wavelengths λ1 to λ3 and the inclination correction with respect to the optical axis AX even in a simple and compact structure. Because even when any one of the laser beams B1 to B3 having the three wavelengths λ1 to λ3 is used the laser beams can be input to the objective lens 9 from the same direction, it becomes possible to secure the compatibility for the three kinds of optical discs 12 (BD, DVD, CD). Further, because high use efficiency of light is required for the blue laser beam B1 which has a shorter wavelength, there is a great merit to attain the three wavelengths compatibility of the optical pickup device 11 in obtaining good beam spot by the beam shaping.

When the optical pickup device has a structure in which the transparent member 7c has a trapezoidal shape (or a wedge shape) cross section as the present embodiment, the beam shaping can be performed by a simple structure. Further, when the diffraction grating Gr on which a plurality of circular shape grooves having rectangular shape cross section (or saw tooth shape cross section) are formed, is utilized on the beam shaping mirror 7, the inclination correction with respect to the optical axis AX can be performed by a simple structure. Still further, when the laser light source 1b for the blue laser is disposed in slanted manner in order that the center positions of the light intensity of the laser beams B1 to B3 having the three wavelengths agree with each other, positional displacement for other laser beams B2, B3 can be corrected by a simple structure.

As it can be understood by the above described explanation, in an optical pickup device which is applicable to a plurality of kinds of optical discs in which wavelengths of used laser beams are different by a plurality of laser light sources which emit laser beams having different wavelength each other, and one objective lens, aberration correction for the respective laser beams can be adequately performed by structuring a first laser beam is input to the objective lens as an infinite system light and a second laser beam is input to the objective lens as finite system light,. Even if the device is structured such that the second laser beam is input to the objective lens as the finite system light, there is no generation of the astigmatism at the beam shaping mirror because the second laser beam is reflected by the wavelength selection film. On the other hand, because light intensity distribution of the first laser beam is converted from an elliptic shape to a circular shape by the beam shaping mirror, minute beam spot can be obtained efficiently.

In addition, by the lens function of the diffraction grating for the second laser beam, because the device has a structure in which the second laser beam that is input to the beam shaping mirror as the infinite system light, is diverged by the diffracting action, it is possible for the optical pickup device to be designed such that both of the first and second laser beams are input to the beam shaping mirror as the infinite system lights. Because the device can be designed such that a distance from a collimating position to a photo detecting position is the same for each of the laser beams, by structuring the both wavelengths as the infinite system, one photo detector receives the respective laser beams and it becomes possible to reduce number of parts by shared use of the photo detector. Further, because the first and second laser beams can be input to the objective lens from the same direction by the optical axis correcting function of the diffraction grating for the second laser beam, generation of coma aberration can be avoided as a result. Therefore, an optical pickup device which has compatibility for a plurality of wavelengths by which good beam spots can be obtained for the respective wavelengths, can be realized.

When the transparent member has a trapezoidal shape cross section or a wedge shape cross section, the beam shaping can be performed in a simple structure. By utilizing the diffraction grating on which a plurality of circular shape grooves having a rectangular shape cross section or a saw tooth shape cross section are formed, inclination correction with respect to the optical axis can be performed in a simple structure. When the laser light source which emits the first laser beam is disposed in slanted manner in order that center positions of light intensity of the first and second laser beams agree with each other, positional displacement with respect to the second laser beam can be corrected in a simple structure. Further, it becomes possible to obtain good beam spot with increasing use efficiency of light by the beam shaping for the first laser beam which has shorter wavelength by making the wavelength of the second laser beam longer than the wavelength of the first laser beam.

If the first laser beam is a blue laser beam and the second laser beam is at least one of the red laser beam and the infrared laser beam, compatibility for the three kinds of optical discs can be secured because even when any one of the laser beam of the three wavelengths is used the laser beam can be input to the objective lens from the same direction. For example, if the blue laser beam, the red laser beam, and the infrared laser beam are used as the laser beams emitted from the three laser light sources, the optical pickup device can be applicable for the three kinds of optical discs of CD, DVD, and BD.

## Claims

1. An optical pickup device which is applicable to a plurality of kinds of optical discs (12) in which wavelengths of used laser beams are different by a plurality of laser light sources (1a, 1b) which emit laser beams having different wavelength each other, and one objective lens (9), the optical pickup device (11) comprising:
a beam shaping mirror (7) composed of a transparent member (7c) and disposed in an optical path between the objective lens (9) and the plurality of laser light sources (1a, 1b), which has a first optical surface (7a) on which a wavelength selection film (Ft) is formed, and a second optical surface (7b) that is composed of a reflecting surface and the first and second optical surfaces (7a, 7b) are positioned in not parallel, wherein
among the plurality of laser beams a first and a second laser beam are emitted from the plurality of laser light sources (1a, 1b),
the wavelength selection film (Ft) has wavelength selectivity by which the first laser beam is passed and the second laser beam is reflected, and
a light intensity distribution of the first laser beam is converted from an elliptic shape to a circular shape by operation in which the first laser beam which passes the wavelength selection film (Ft) and is input to the beam shaping mirror (7), is reflected on the second optical surface (7b), passes the wavelength selection film (Ft) and is output from the beam shaping mirror (7)
**characterized in that**
a diffraction grating (Gr) is formed on the first optical surface (7a),
the optical pickup device (11) has a structure in which the first laser beam and the second laser beam are input to the beam shaping mirror (7) as infinite system lights, the first laser beam is input to the objective lens (9) as the infinite system light, and the second laser beam is input to the objective lens (9) as finite system light, and
the diffraction grating (Gr) has an optical axis correcting function by which directions of the first and second laser beams which are output from the beam shaping mirror (7) are made the same by diffraction of the second laser beam, and a lens function by which the second laser beam is diverged by a diffracting action.

2. The optical pickup device according to claim 1, **characterized in that** the transparent member (7c) has a trapezoidal shape cross section or a wedge shape cross section.

3. The optical pickup device according to claim 1 or claim 2, **characterized in that** the diffraction grating (Gr) is formed by a plurality of circular shape grooves having a rectangular shape cross section or a saw tooth shape cross section:

4. The optical pickup device according to any one of claim 1 to claim 3, **characterized in that** the laser light source which emits the first laser beam is disposed in slanted manner in order that center positions of light intensity of the first and second laser beams agree with each other.

5. The optical pickup device according to any one of claim 1 to claim 4, **characterized in that** wavelength of the second laser beam is longer than wavelength of the first laser beam.

6. The optical pickup device according to any one of claim 1 to claim 5, **characterized in that** the first laser beam is a blue laser beam (B1), and the second laser beam is at least one of a red laser beam (B2) and an infrared laser beam (B3).

7. An optical pickup device according to claim 6, **characterized in that** the optical pickup device (11) is applicable to three kinds of optical discs in which wavelengths of used laser beams are different by three laser light sources which emit respectively a blue laser beam (B1), a red laser beam (B2), and an infrared laser beam (B3), and the objective lens (9), wherein the optical pickup device (11) further comprises
a collimator lens (4) in the optical path between the beam shaping mirror (7) and the three laser light sources, which converts the blue laser beam (B1), the red laser beam (B2), and the infrared laser beam (B3) into parallel rays.

## Patentansprüche

1. Optische Lesekopfvorrichtung, welche auf mehrere Arten von Bildplatten (12) anwendbar ist, in denen sich Wellenlängen verwendeter Laserstrahlen durch mehrere Laserlichtquellen (1a, 1b), welche Laserstrahlen mit voneinander unterschiedlichen Laserstrahlen emittieren, und eine Objektivlinse (9) unterscheiden, wobei die optische Lesekopfvorrichtung (11) Folgendes umfasst:
einen Strahlformungsspiegel (7), der aus einem transparenten Element (7c) besteht und in einem Strahlengang zwischen der Objektivlinse (9) und den mehreren Laserlichtquellen (1a, 1b) angeordnet ist, der eine erste optische Oberfläche (7a), auf der eine Wellenselektionsschicht (Ft) ausgebildet ist, und eine zweite optische Oberfläche (7b) aufweist, die aus einer reflektierenden Oberfläche besteht, und die erste und zweite optische Oberfläche (7a, 7b) sind nicht parallel positioniert, wobei
von den mehreren Laserstrahlen ein erster und ein zweiter Laserstrahl aus den mehreren Laserlichtquellen (1a, 1b) emittiert werden,
die Wellenlängenselektionsschicht (Ft) eine Wellenlängenselektivität aufweist, durch welche der erste Laserstrahl hindurchgeführt und der zweite Laserstrahl reflektiert wird, und
eine Lichtintensitätsverteilung des ersten Laserstrahls aus einer elliptischen Form in eine Kreisform durch eine Betätigung umgewandelt wird, bei der der erste Laserstrahl, der durch die Wellenlängenselektionsschicht (Ft) hindurchgeht und in den Strahlenformungsspiegel (7) eingegeben wird, auf der zweiten optischen Oberfläche (7b) reflektiert wird, durch die Wellenlängenselektionsschicht (Ft) hindurchgeht und aus dem Strahlenformungsspiegel (7) ausgegeben wird,
**dadurch gekennzeichnet, dass**
ein Beugungsgitter (Gr) auf der ersten optischen Oberfläche (7a) ausgebildet ist,
die optische Lesekopfvorrichtung (11) einen Aufbau aufweist, in dem der erste Laserstrahl und der zweite Laserstrahl in den Strahlformungsspiegel (7) als endlose Systemlichte eingegeben werden, der erste Laserstrahl in die Objektivlinse (9) als das endlose Systemlicht eingegeben wird und der zweite Laserstrahl in die Objektivlinse (9) als endliches Systemlicht eingegeben wird, und
das Beugungsgitter (Gr) eine Sichtachsen-Korrekturfunktion aufweist, durch welche Richtungen des ersten und zweiten Laserstrahls, die aus dem Strahlformungsspiegel (7) ausgegeben werden, durch Beugung des zweiten Laserstrahls gleich gemacht werden, und eine Linsenfunktion aufweist, durch welche der zweite Laserstrahl durch einen Beugungsvorgang divergiert wird.

2. Optische Lesekopfvorrichtung nach Anspruch 1, **dadurch gekennzeichnet, dass** das transparente Element (7c) einen Trapezform-Querschnitt oder einen Keilform-Querschnitt hat.

3. Optische Lesekopfvorrichtung nach Anspruch 1 oder Anspruch 2, **dadurch gekennzeichnet, dass** das Beugungsgitter (Gr) von mehreren kreisförmigen Rillen mit Rechteckform-Querschnitt oder Sägezahnform-Querschnitt gebildet wird.

4. Optische Lesekopfvorrichtung nach irgendeinem der Ansprüche 1 bis 3, **dadurch gekennzeichnet, dass** die Laserlichtquelle, die den ersten Laserstrahl emittiert, geneigt angeordnet ist, damit Mittelpositionen der Lichtintensität des ersten und zweiten Laserstrahls miteinander übereinstimmen.

5. Optische Lesekopfvorrichtung nach irgendeinem der Ansprüche 1 bis 4, **dadurch gekennzeichnet, dass** die Wellenlänge des zweiten Laserstrahls länger als die Wellenlänge des ersten Laserstrahls ist.

6. Optische Lesekopfvorrichtung nach irgendeinem der Ansprüche 1 bis 5, **dadurch gekennzeichnet, dass** der erste Laserstrahl ein blauer Laserstrahl (B1) und der zweite Laserstrahl zumindest ein roter Laserstrahl (B2) oder ein Infrarotlaserstrahl (B3) ist.

7. Optische Lesekopfvorrichtung nach Anspruch 6, **dadurch gekennzeichnet, dass** die optische Lesekopfvorrichtung 11) auf drei Arten von Bildplatten anwendbar ist, bei denen sich Wellenlängen verwendeter Laserstrahlen durch drei Laserlichtquellen, die einen blauen Laserstrahl (B 1) bzw. einen roten Laserstrahl (B2) bzw. einen Infrarotlaserstrahl (B3) emittieren, und die Objektivlinse (9) unterscheiden, wobei die optische Lesekopfvorrichtung (11) weiterhin Folgendes umfasst:
eine Kollimatorlinse (4) in dem optischen Pfad zwischen dem Strahlformungsspiegel (7) und den drei Laserlichtquellen, welche den blauen Laserstrahl (B1), den roten Laserstrahl (B2) und den Infrarotlaserstrahl (B3) in parallele Strahlen umwandelt.

## Revendications

1. Tête de lecture/écriture optique qui peut trouver son application dans une pluralité de types de disques optiques (12) dans lesquels les longueurs d'ondes des faisceaux laser utilisés sont différentes d'une pluralité de sources de lumière laser (1a, 1b) qui émettent des faisceaux laser ayant des longueurs d'ondes différentes les unes des autres, et une lentille d'objectif (9), la tête de lecture/écriture optique (11) comprenant :
un miroir de mise en forme du faisceau (7) constitué d'un élément transparent (7c) et disposé sur un trajet optique entre la lentille d'objectif (9) et la pluralité de sources de lumière laser (1a, 1b), qui présente une première surface optique (7a) sur laquelle est formé un film de sélection des longueurs d'ondes (Ft), et une deuxième surface optique (7b), qui est constituée d'une surface réfléchissante, et les première et deuxième surfaces optiques (7a, 7b) ne se trouvent pas en position parallèle, dans laquelle
parmi la pluralité de faisceaux laser, un premier et un deuxième faisceau laser sont émis à partir de la pluralité de sources de lumière laser (1a, 1b),
le film de sélection des longueurs d'ondes (Ft) possède une sélectivité des longueurs d'ondes qui fait passer le premier faisceau laser et qui réfléchit le deuxième faisceau laser, et
une distribution de l'intensité lumineuse du premier faisceau laser est convertie à partir d'une forme elliptique en une forme circulaire par une opération dans laquelle le premier faisceau laser, qui passe à travers le film de sélection des longueurs d'onde (Ft) et est envoyé dans le miroir de mise en forme du faisceau (7), est réfléchi sur la deuxième surface optique (7b), passe à travers le film de sélection des longueurs d'ondes (Ft) et sort par le miroir de mise en forme du faisceau (7),
**caractérisée en ce que**
un réseau de diffraction (Gr) est formé sur la première surface optique (7a),
la tête de lecture/écriture optique (11) possède une structure dans laquelle le premier faisceau laser et le deuxième faisceau laser sont envoyés dans le miroir de mise en forme du faisceau (7) sous forme de lumières à système infini, le premier faisceau laser est envoyé dans la lentille d'objectif (9) sous forme de lumière à système infini, et le deuxième faisceau laser est envoyé dans la lentille d'objectif (9) sous forme de lumière à système fini, et
le réseau de diffraction (Gr) possède une fonction de correction de l'axe optique grâce à laquelle les directions des premier et deuxième faisceaux laser qui sortent par le miroir de mise en forme du faisceau (7) sont rendues identiques par diffraction du deuxième faisceau laser, et une fonction de lentille grâce à laquelle le deuxième faisceau laser est dévié par une action de diffraction.

2. La tête de lecture/écriture optique selon la revendication 1, **caractérisée en ce que** l'élément transparent (7c) a une section transversale trapézoïdale ou une section transversale angulaire.

3. La tête de lecture/écriture optique selon la revendication 1 ou la revendication 2, **caractérisée en ce que** le réseau de diffraction (Gr) est formé par une pluralité de rainures de forme circulaire ayant une section transversale rectangulaire ou une section transversale en dents de scie.

4. La tête de lecture/écriture optique selon l'une quelconque des revendications 1 à 3, **caractérisée en ce que** la source de lumière laser qui émet le premier faisceau laser est disposée de manière oblique afin que les positions du centre de l'intensité lumineuse des premier et deuxième faisceaux laser correspondent l'une avec l'autre.

5. La tête de lecture/écriture optique selon l'une quelconque des revendications 1 à 4, **caractérisée en ce que** la longueur d'ondes du deuxième faisceau laser est plus longue que la longueur d'onde du premier faisceau laser.

6. La tête de lecture/écriture optique selon l'une quelconque des revendications 1 à 5, **caractérisée en ce que** le premier faisceau laser est un faisceau laser bleu (B1) et le deuxième faisceau laser est au moins un parmi un faisceau laser rouge (B2) et un faisceau laser infrarouge (B3).

7. Tête de lecture/écriture optique selon la revendication 6, **caractérisée en ce que** la tête de lecture/écriture optique (11) peut trouver son application dans trois types de disques optiques dans lesquels les longueurs d'onde des faisceaux laser utilisés sont différentes des trois sources de lumière laser qui émettent respectivement un faisceau laser bleu (B1), un faisceau laser rouge (B2), et un faisceau laser infrarouge (B3), et la lentille d'objectif (9), dans laquelle la tête de lecture/écriture optique (11) comprend en outre :
une lentille de collimateur (4) placée sur le trajet optique entre le miroir de mise en forme du faisceau (7) et les trois sources de lumière laser, qui convertit le faisceau laser bleu (B1), le faisceau laser rouge (B2) et le faisceau laser infrarouge (B3) en rayons parallèles.
